(19) Europäisches Patentamt
European Patent Office
Office européen des brevets

(11) Veröffentlichungsnummer: **0 422 437 A2**

(12) **EUROPÄISCHE PATENTANMELDUNG**

(21) Anmeldenummer: **90118354.1**

(22) Anmeldetag: **25.09.90**

(51) Int. Cl.5: **C08G 79/02**, C08L 101/00, //(C08L101/00,85:02)

(30) Priorität: **07.10.89 DE 3933548**

(43) Veröffentlichungstag der Anmeldung: **17.04.91 Patentblatt 91/16**

(84) Benannte Vertragsstaaten: **DE ES FR GB IT NL**

(71) Anmelder: **BAYER AG**
**W-5090 Leverkusen 1 Bayerwerk(DE)**

(72) Erfinder: **Schulz-Schlitte, Wolfgang-Hans, Dr.**
**Wiedstrasse 2**
**W-4047 Dormagen(DE)**
Erfinder: **Kirsch, Jürgen, Dr.**
**Hahnenweg 1**
**W-5000 Koeln 80(DE)**
Erfinder: **Idel, Karsten-Josef, Dr.**
**Am Schwarzkamp 38**
**W-4150 Krefeld(DE)**
Erfinder: **Fengler, Gerd, Dr.**
**Deutschordensweg 12**
**W-4150 Krefeld-Traar(DE)**
Erfinder: **Arndt, Uwe, Dr.**
**Malteserstrasse 85**
**W-5000 Koeln 40(DE)**
Erfinder: **Block, Hans-Dieter, Dr.**
**Biesenbach 49**
**W-5090 Leverkusen 3(DE)**

(54) **Hochverzweigte Polyphosphonate.**

(57) Die neuen Polyphosphonate, die über mehrfachfunktionelle Phosphorverbindungen hochverzweigt sind, eignen sich zur Verwendung von Formkörpern, Fasern oder Filmen sowie als Flammschutzmittel und Stabilisatoren in Kunststoffen. Die neuen, hochverzweigten Polyphosphonate besitzen eine gute thermische Alterungsbeständigkeit und gewähren eine gute Verarbeitbarkeit verbunden mit einer hohen Migrationsfestigkeit bei erhöhten Gebrauchstemperaturen.

EP 0 422 437 A2

# HOCHVERZWEIGTE POLYPHOSPHONATE

Die Erfindung betrifft neue, über mehrfachfunktionelle Phosphorverbindungen hochverzweigte Polyphosphonate, ein Verfahren zur Herstellung dieser Polyphosphonate sowie die Verwendung der Polyphosphonate zur Herstellung von Formkörpern, Fasern oder Filmen sowie als Flammschutzmittel und Stabilisatoren in Kunststoffen.

Polyphosphonate sind bekannt (vgl. DE 21 32 350, US 38 30 771, 38 29 405, JP 47/39154, 48/01600, 50/062245, 50/034649, 51/11869, DE 30 02 550). Die in den genannten Veröffentlichungen beschriebenen Polyphosphonate besitzen eine lineare Struktur und werden u.a. als Flammschutzverbesserer in Kunststoffen eingesetzt.

In EP 00 28 345 werden neben linearen aromatischen Polyphosphonaten auch verzweigte Polyphosphonate beschrieben, wobei als Verzweiger Triarylphosphate neben 3- und 4-wertigen aromatischen Alkoholen erwähnt werden. Nachteilig bei den bekannten Polyphosphonaten ist, daß beispielsweise die thermische Alterungsbeständigkeit der Polyphosphonate nicht ausreichend ist oder bei den bekannten, vernetzten Polyphosphonaten eine hohe Vernetzerkonzentration erforderlich ist, um eine ausreichende Festigkeit, gute Verarbeitbarkeit und eine hohe Migrationsfestigkeit bei erhöhter Gebrauchstemperatur zu erreichen. Insbesondere bei der Verwendung von aromatischen Hydroxyverbindungen macht sich dieser Faktor negativ bemerkbar, da so der effektive Phosphorgehalt im Polymerisat erniedrigt wird. Auch die Verwendung von Triarylphosphaten als Vernetzer lösen dieses Problem nicht, da infolge ihrer erniedrigten Reaktivität es äußerst schwierig ist, den Verzweigungsgrad so zu wählen, daß die resultierenden Polyphosphonate noch gut verarbeitbar sind (aufschmelzbar) und sie gleichzeitig ein ausreichend hohes Molekulargewicht besitzen, damit eine gute Verarbeitbarkeit gewährleistet bleibt.

Gegenstand der Erfindung sind daher neuartige, hochverzweigte Polyphosphonate basierend auf

A) 95 bis 99,9 Gew.-%, bevorzugt 96 bis 99,5 Gew.-%, Struktureinheiten der Formel

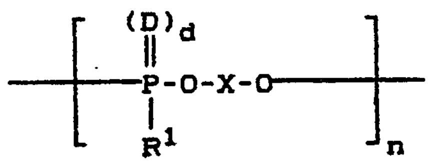

(I),

worin

$R^1$ für einen gegebenenfalls substituierten $C_1$-$C_{10}$-Alkylrest oder für einen gegebenenfalls substituierten aromatischen Ring mit 6 bis 12 C-Atomen steht,

D für Schwefel oder Sauerstoff, bevorzugt für Sauerstoff, steht,

d Null oder 1, bevorzugt 1, bedeutet,

n für ganze Zahlen von 2 bis 1000, bevorzugt 2 bis 100, steht und

X für die Formel

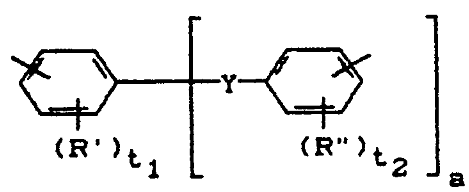

steht,

in der

Y eine Einfachbindung ist oder $C_1$-$C_3$-Alkylen, $C_5$-$C_{12}$-Cycloalkylen oder O, S, CO, $SO_2$, bevorzugt $C_1$-$C_3$-Alkylen, bedeutet,

$R'$ und $R''$ unabhängig voneinander $C_1$-$C_{10}$-Alkyl, Halogen, Phenyl oder Wasserstoff, bevorzugt Wasserstoff, bedeuten,

a für Null oder 1, bevorzugt 1, steht und

$t_1$ und $t_2$ unabhängig voneinander 0, 1, 2, 3 oder 4, bevorzugt 0, bedeuten,

oder

X ein Naphthylen- oder Phenolphthaleinrest bedeutet,
und

B) 0,1 bis 5 Gew.-%, bevorzugt 0,5 bis 4 Gew.-%, Struktureinheiten der Formeln

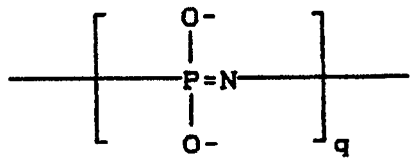
(II),

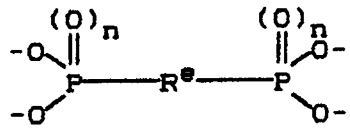
(III),

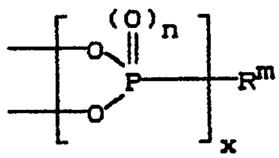
(IV),

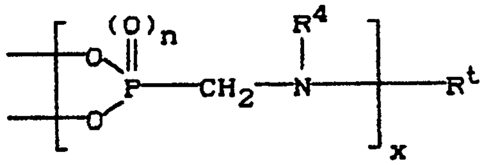
(V)

**und/oder**

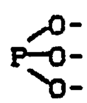
(VI),

worin
$R^4$ für Wasserstoff oder einen gegebenenfalls substituierten $C_1$-$C_{10}$-Alkylrest, bevorzugt Wasserstoff, steht,
$R^e$ ein divalenter Rest der Formel

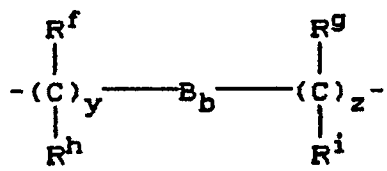
ist,

in der
y und z unabhängig voneinander Null, 1, 2, 3, 4 oder 5, bevorzugt 1, bedeuten,
b für Null oder 1, bevorzugt 1, steht,
B O, S, $SO_2$, $NR^j$ bedeutet und
$R^f$, $R^g$, $R^h$, $R^i$ und $R^j$ für Wasserstoff oder für gegebenenfalls substituiertes $C_1$-$C_6$-Alkyl oder gegebenenfalls substituiertes $C_6$-$C_{12}$-Aryl, bevorzugt für Wasserstoff, stehen,
$R^m$ für einen oligomeren oder polymeren Rest steht, an den der Phosphor direkt oder gegebenenfalls über eine $C_1$-$C_{10}$-Alkylkette esterartig gebunden ist, wobei der oligomere oder polymere Rest auf

ungesättigten organischen Verbindungen basiert, wie Acrylsäure, Methacrylsäure, Ethen, Propen, Buten, Maleinsäure, und bis zu 1000 Kohlenstoffatomen, bevorzugt 100 Kohlenstoffatomen, besitzt,

$R^t$ ein Rest einer organischen Verbindung ist, die sich ableitet von gegebenenfalls substituierten Aminen, Diaminen, Triaminen, Oligo- oder Polyaminen, und bis zu 1000 C-Atomen, bevorzugt 100 C-Atomen, besitzt,

q für eine ganze Zahl größer als 2 steht, bevorzugt für 3 und 4 steht,

n Null oder 1, bevorzugt 1, bedeutet, und

x für eine ganze Zahl von 2 bis 1000, bevorzugt 2 bis 100, steht.

Als Reste $R^1$ werden bevorzugt genannt der Methyl- und Ethylrest sowie der Phenylrest, besonders bevorzugt der Methylrest.

X steht bevorzugt für einen gegebenenfalls substituierten Phenylen-, Bisphenylen-, $C_1$-$C_3$-Alkylbisphenylen-, $C_5$-$C_{12}$-Cycloalkylbisphenylen-, Sulfonylbisphenylen-, Oxobisphenylen-, Thiobisphenylen-, Phenolphthalein-, Carbonylbisphenylen- oder Naphthylenrest, insbesondere für Phenylen oder $C_1$-$C_3$-Alkylbisphenylen. In diesem Zusammenhang sei erwähnt, daß die den bivalenten Resten X zugrundeliegenden Hydroxyverbindungen bei der Synthese der Struktureinheit (I) in beliebigen Mischungen untereinander eingesetzt werden können. In diesem Fall ist die Verteilung der Bausteine (X) statistisch.

Als Substituenten für die Reste $R^1$, $R^f$, $R^g$, $R^h$, $R^i$, $R^j$ und $R^4$ kommen in Frage -O-$C_1$-$C_4$-Alkylreste, wie der Methoxy-, Ethoxy- und Propoxy-Rest, und Halogene, wie Chlor und Brom. Bei dem Rest $R^4$ kommt insbesondere als weiterer Substituent die $CH_2OH$-Gruppe in Frage.

Als Halogene bei den obengenannten Formeln werden bevorzugt genannt Chlor und Brom, als Arylreste der Phenylrest, als Rest $R^m$ der oligo-Ethen- bis poly-Ethen (4 bis 100 C-Atome) sowie der oligo-Acrylat- bis poly-Acrylat-Rest (4 bis 100 C-Atome) und als Rest $R^t$ der oligo- bis poly-Acrylamid-Rest (4 bis 100 C-Atome) sowie der Melaminrest.

Bevorzugt sind hochverzweigte Polyphosphonate basierend auf

A) Struktureinheiten der Formeln

1) 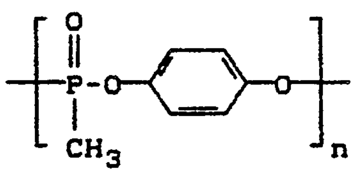 , 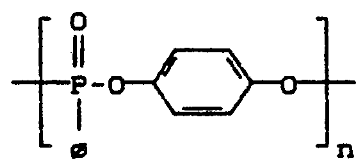 ,

2) 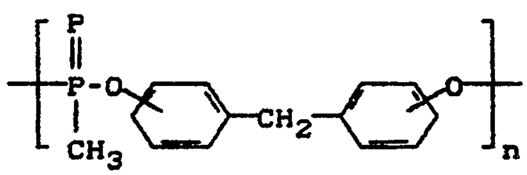

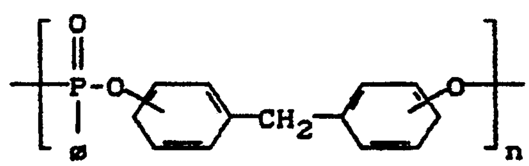

3) 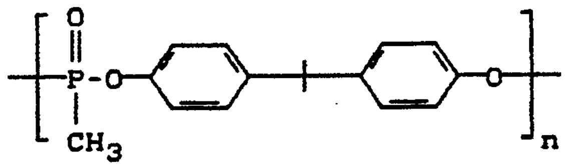 ,

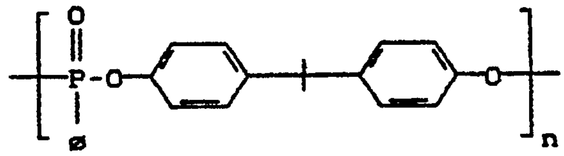

4) 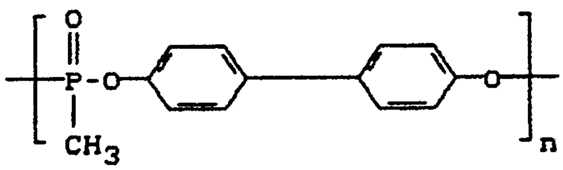 oder

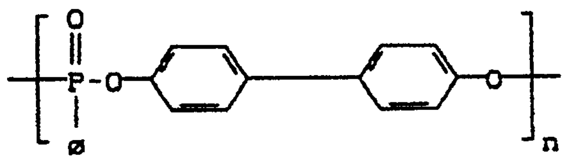 ,

worin
n die in Formel (I) genannte Bedeutung besitzt, und
B) Struktureinheiten der Formeln

1) 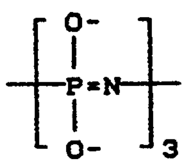 ; 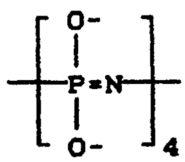

2) 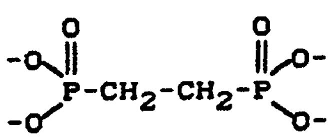 ; 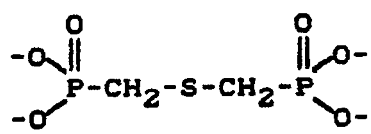

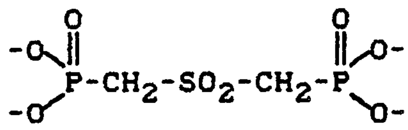 ; 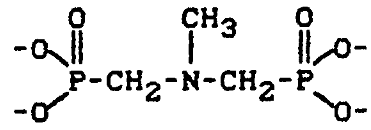

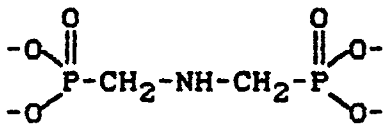 ; 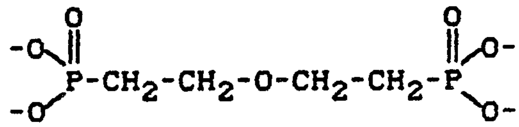

3) 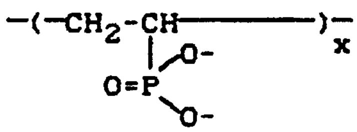 , 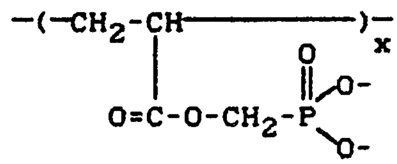

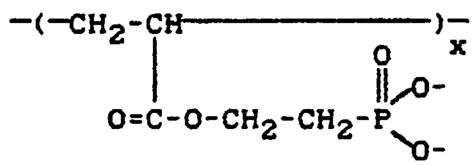 ,

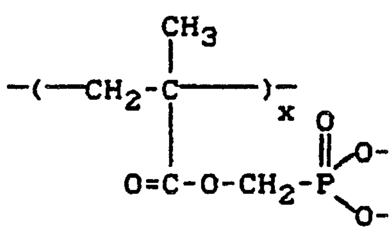 , 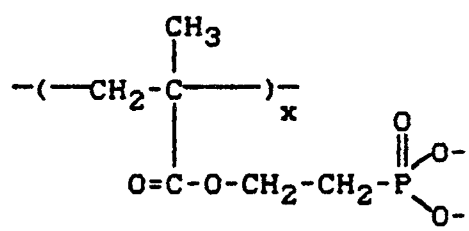

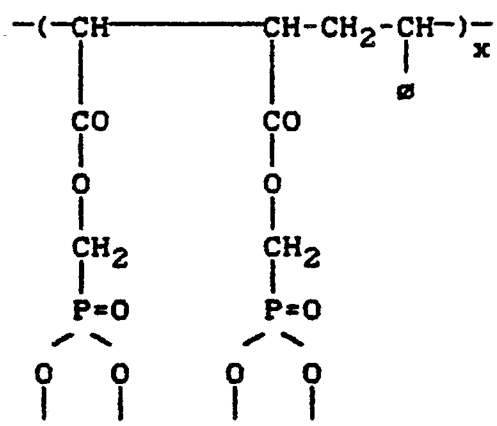

4) 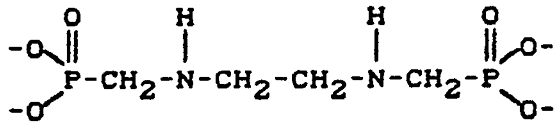

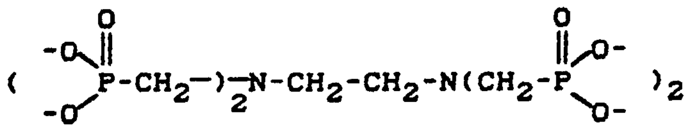

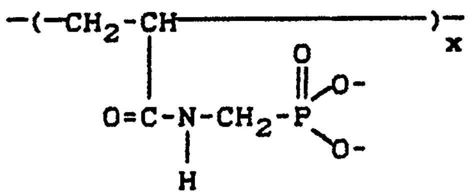

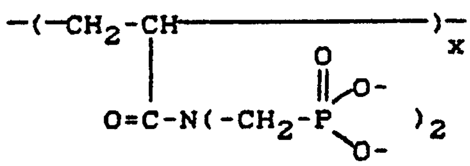

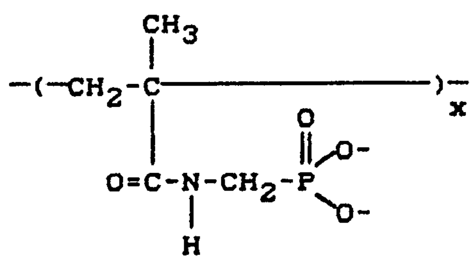

und/oder

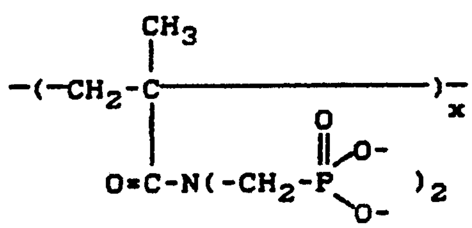

wobei
x die in Formeln (IV) und (V) genannte Bedeutung besitzt, sowie

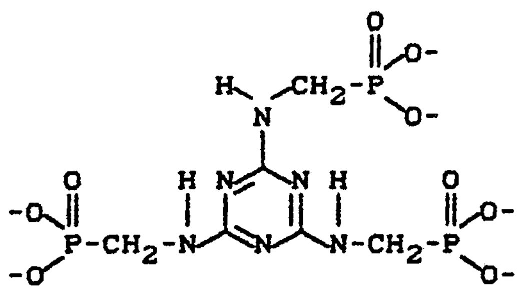

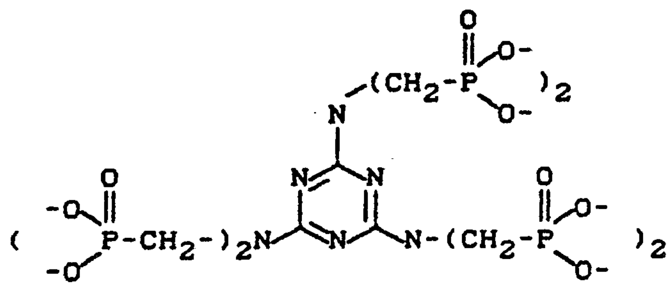

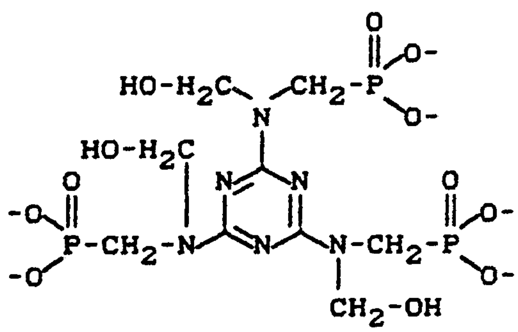

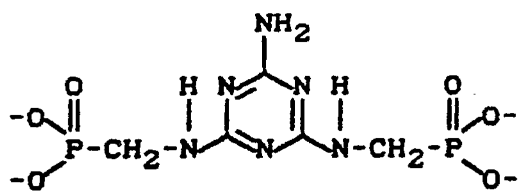

und/oder

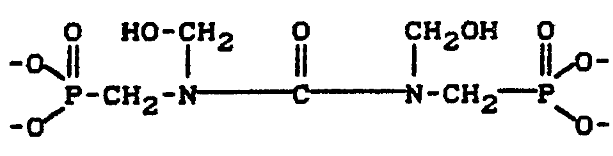

.

Besonders bevorzugt sind hochverzweigte Polyphosphonate basierend auf

A) Struktureinheiten der Formeln

1) 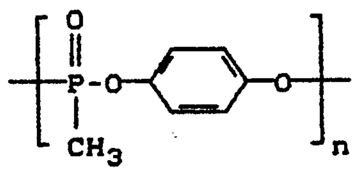

2) 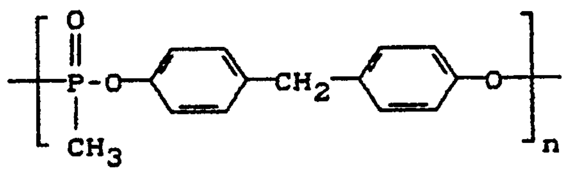

3) 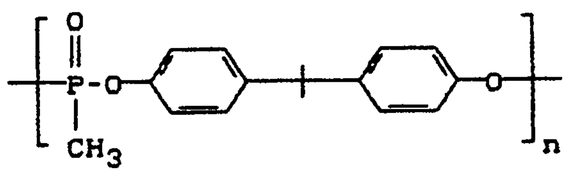

und/oder

4) 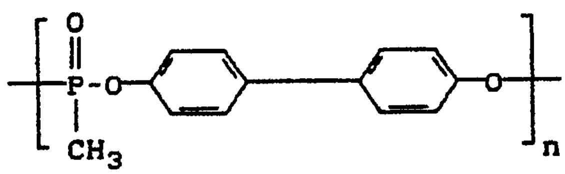

worin
n die in Formel (I) genannte Bedeutung besitzt und
B) Struktureinheiten der Formeln

1) 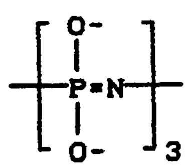 ; 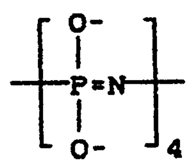

2) 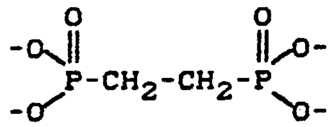 , 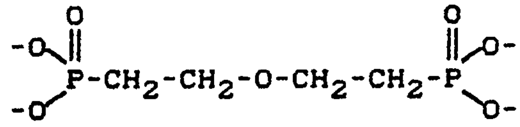

3) 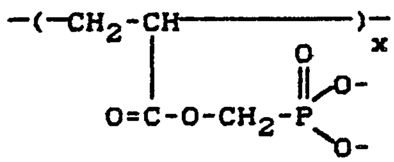 , 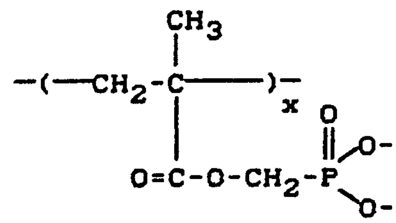

4) 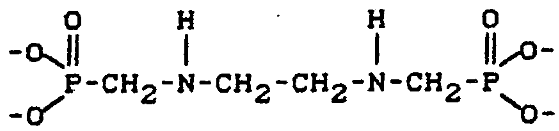

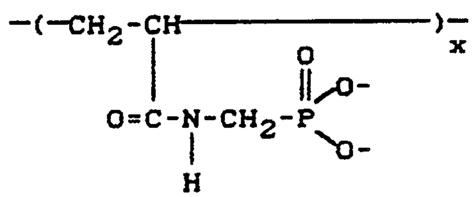

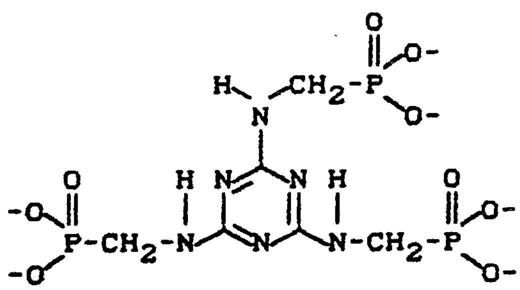

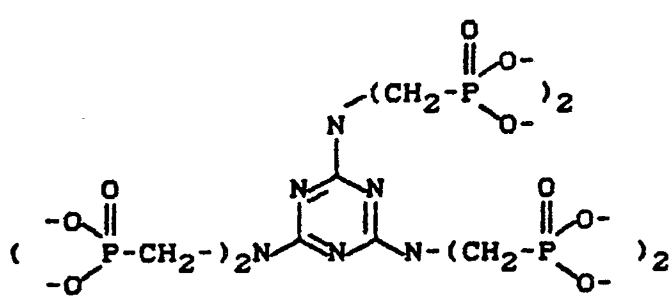 und/oder

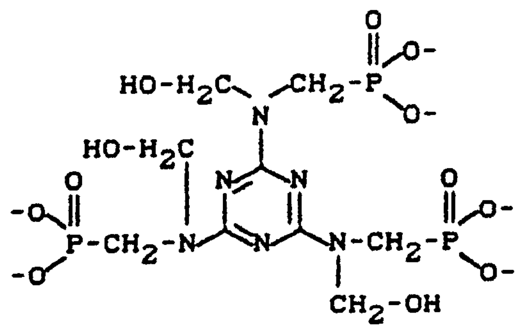 ,

wobei

X die in Formeln (IV) und (V) genannte Bedeutung besitzt.

Die der Struktureinheit (I) (Komponente A) zugrundeliegenden Polyphosphonate sind z.B. beschrieben in DE 38 33 694, DE 3 002 550, JA 47-39154, JA 48-01600, JA 50-062245, JA 50-034649, JA 51-111869.

Die den Struktureinheiten (II), (III), (IV), (V) und (VI) zugrundeliegenden Phosphorverbindungen (Komponente B) sind z.B. beschrieben in Houben-Weyl, 4. Aufl., Makromolekulare Stoffe, Teil 3, 1987, S. 2210 ff sowie in den parallelen deutschen Patentanmeldungen Le A 27 168 und Le A 27 222.

Verbindungen der allgemeinen Formel (III) sind nach der DE 21 67 077 gut aus den entsprechenden Alkandiolen und Triphenylphosphit zugänglich.

Verbindungen der allgemeinen Formel (IV) sind durch Homo- oder Co-Polymerisation ungesättigter Phosphorverbindungen, wie zum Beispiel durch Polymerisation von Vinylphosphonsäureester, Allylphosphonsäureester, Methallylphosphonsäureester, oder auch durch Copolymerisation dieser P-Verbindungen mit phosphorfreien ungesättigten Monomeren, wie z.B. Butadien, Acrylnitril, Acrylaten oder Methacrylaten, oder durch esterartige Anbindung funktioneller Phosphorverbindungen, wie z.B. Hydroxymethanphosphonsäureester oder Hydroxyethanphosphonsäureester an monomere ungesättigte Verbindungen, wie z.B. Acrylsäure, Methacrylsäure oder Maleinsäure und anschließende Polymerisation, oder esterartige Anbindung der genannten Phosphorverbindungen an Polymere, wie z.B. an Polyacrylat, Polymethacrylat oder Polymaleinat oder Copolymeren dieser Monomere mit weiteren ungesättigten Verbindungen, erhältlich.

Verbindungen der allgemeinen Formel (V) sind nach der Le A 27 168 und Le A 27 222 gut aus Aminen oder Amiden, Paraformaldehyd und Triarylphosphiten zugänglich.

Die Struktureinheiten der Komponenten A) und B) sind dabei in den zuvor erwähnten Mengenverhältnissen im Polyphosphonat enthalten. Die Struktureinheiten der Komponente B) können in den hochverzweigten Polyphosphonaten im Gemisch untereinander vorhanden sein, wobei sich die günstigsten Mengenverhältnisse untereinander leicht durch Vorversuche ermitteln lassen und u.a. von dem gegebenen Verwendungszweck abhängen.

Ein weiterer Gegenstand der Erfindung ist ein Verfahren Zur Herstellung der hochverzweigten Polyphosphonate durch Umesterung von mindestens einem Phosphonsäureester und einer polyfunktionellen Phosphorver bindung, die den oben erwähnten Struktureinheiten (II) bis (VI) der Komponente B) zugrundeliegen und als sogenannte Verzweiger bezeichnet werden, mit einer aromatischen Dihydroxyverbindung in der Schmelze in sauerstofffreier Gasatmosphäre bei atmosphärem Druck oder vermindertem Druck in Gegenwart katalytischer Mengen eines Umesterungskatalysators unter Abdestillieren der flüchtigen Bestandteile.

Die Herstellung der hochverzweigten Polyphosphonate läßt sich besonders vorteilhaft in Gegenwart von 0,5 bis 5 Gew.-% einer organischen Verbindung mit Anhydrid- oder Lactonstruktur, insbesondere mit Phenolphthalein, bezogen auf eingesetzte Dihydroxyverbindung, durchführen. Als Umesterungskatalysatoren kommen in Frage Natriumalkoholate, wie Natriumphenolat oder Natriummethanolat, oder mindestens einer aus der Gruppe der $C_1$-$C_{18}$-Tetraalkyltitanate, $C_3$-$C_{18}$-Tetraalkylzirkonate, $C_2$-$C_{18}$-Trialkylvanadylate, $C_2$-$C_4$-Dialkylzinnoxide, $C_2$-$C_4$-Dialkyl-$C_2$-$C_4$-dialkylzinnverbindungen, Zink- und Calziumsalze, insbesondere deren Acetate, einer aus der Gruppe der Antimon- oder Wismutsalze, einer aus der Gruppe der $C_2$-$C_4$-Dialkylzinnsäureester, einer aus der Gruppe der $C_2$-$C_4$-Trialkylzinnsäureester oder mindestens einer der Katalysatoren aus den vorstehend genannten Gruppen im Gemisch mit Germaniumdioxid oder Titandioxid.

Die Herstellung der neuen, hochverzweigten Polyphosphonate kann im Prinzip erfolgen wie in EP 00 28 345 beschrieben.

Als aromatische Dihydroxyverbindungen kommen solche der allgemeinen Formel

HO - X - OH (VII)

in Frage, in der
X die in Formel (I) genannte Bedeutung besitzt.

Solche aromatischen Dihydroxyverbindungen sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 095, der französischen Patentschrift 1 561 518 und in der Monographie "H. Schnell, Chemistry and Physics of Polycarbonates, Interscience Publishers, New York 1964", beschrieben.

Genannt werden:
Hydochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole sowie deren kernalkylierte und kernhalogenierte Verbindungen.

Bevorzugt werden als aromatische Dihydroxyverbindungen eingesetzt 4,4'-Dihydroxydi-(4-hydroxyphenyl)-propan, Bis-(hydroxyphenyl)-methan, Hydrochinon und Bis-(4-hydroxyphenyl)-sulfon, besonders bevorzugt Hydrochinon, 2,2-Bis-(4-hydroxyphenyl)-propan und Bis-(hydroxyphenyl)-methan.

Als Phosphonsäureester kommen Verbindungen der Formeln

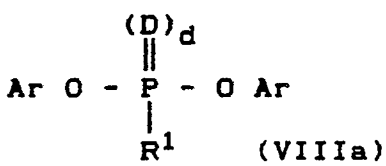
(VIIIa)

oder

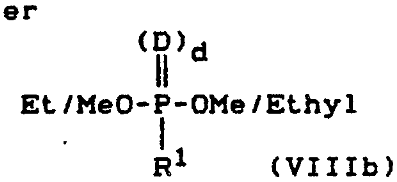
(VIIIb)

in Frage, in der
$R^1$, D und d die in Formel (I) genannte Bedeutung besitzen und
Ar für einen Arylrest, bevorzugt für Phenyl steht und
Et für Ethyl und Me für Methyl steht.

Als Diarylphosphonsäureester kommen insbesondere Verbindungen der nachfolgenden Formeln in Frage:

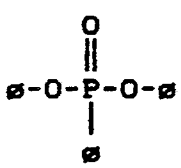 ; 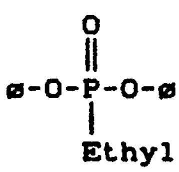 ; 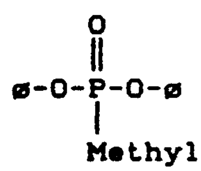 ,

bevorzugt

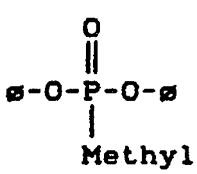 ,

wobei $\phi$ für Phenyl steht.

Als sogenannte Verzweiger werden polyfunktionelle Phosphorverbindungen der Formel

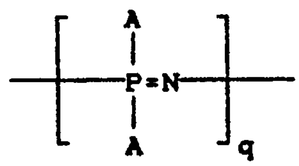 (IX),

in der
A für einen gegebenenfalls substituierten O-Arylrest mit 6 bis 18 C-Atomen, bevorzugt 6 bis 12 C-Atomen, oder für Halogen, bevorzugt Chlor und Brom, steht und
q die in Formel (II) genannte Bedeutung besitzt, eingesetzt.

Genannt werden als einzusetzende Verbindungen der Formel (IX) insbesondere

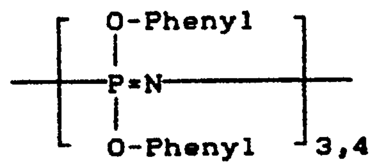 ,

bevorzugt das Phosphazen P 3800 der Firma Shin Nisso Kako, Japan.

Weiterhin können als Verzweiger eingesetzt werden Verbindungen der Formel

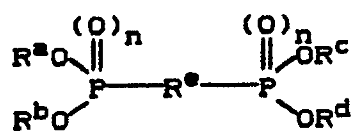 (X),

in der
$R^e$ und n die in der Formel (III) genannte Bedeutung besitzen und
$R^a$, $R^b$, $R^c$ und $R^d$ $C_6$-$C_{12}$-Arylreste oder Methyl- oder Ethylreste sind, bevorzugt Phenyl bedeuten.

Besonders bevorzugt werden eingesetzt Verbindungen der Formel
$(PhO)_2$-PO-$CH_2$-O-$CH_2$-PO-$(OPh)_2$ (Xa)
und Verbindungen der Formel
$(PhO)_2$-PO-$CH_2$-$CH_2$-PO-$(OPh)_2$ (Xb).

Darüber hinaus können als Verzweiger eingesetzt werden Verbindungen der Formel

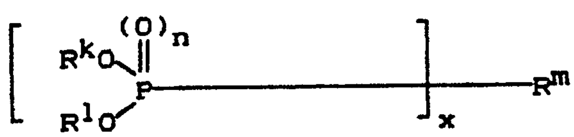 (XI),

worin
$R^m$ und x die in Formel (IV) genannte Bedeutung besitzen und
$R^k$ und $R^l$ für einen $C_6$-$C_{12}$-Arylrest oder Methyl- oder Ethylreste, bevorzugt für den Phenylrest stehen.

Bevorzugt wird der Verbindungstyp der Formeln

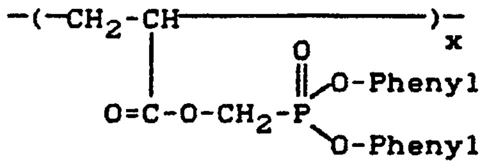

und (XIa)

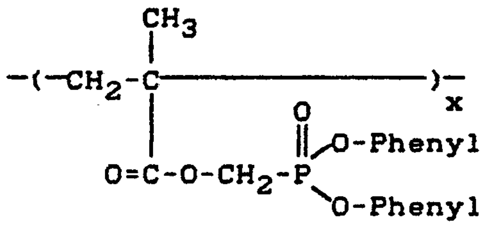

(XIb)

worin
x ≥2, bevorzugt 2 bis 100, ist, eingesetzt.

Weiterhin ist es möglich als Verzweiger Verbindungen der Formel

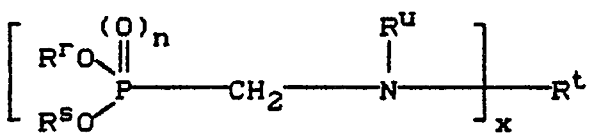

(XIII),

einzusetzen, in der
$R^t$, x und n die in Formel (V) genannte Bedeutung besitzen, und
$R^u$ für Wasserstoff oder einen aliphatischen, cycloaliphatischen oder aromatischen Rest mit 1 bis 12 C-Atomen, bevorzugt 1 bis 6 C-Atomen, steht und
$R^r$ sowie $R^s$ einen $C_6$-$C_{10}$-Arylrest oder Methyl- oder Ethylrest, bevorzugt Phenyl, bedeuten.

Bevorzugt werden Verbindungen der Formel

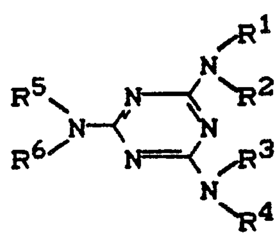

(XIIIa),

in der
$R^1$ bis $R^6$ unabhängig voneinander für Wasserstoff, $C_1$-$C_6$-Alkyl oder Hydroxyalkyl oder $CH_2$-P=O(O-Phenyl)$_2$ stehen, mit der Maßgabe, daß mindestens drei Reste $R^1$ bis $R^6$ $CH_2$-P=O(O-Phenyl)$_2$ bedeuten.

Besonders bevorzugt sind die Verbindungen der Formel

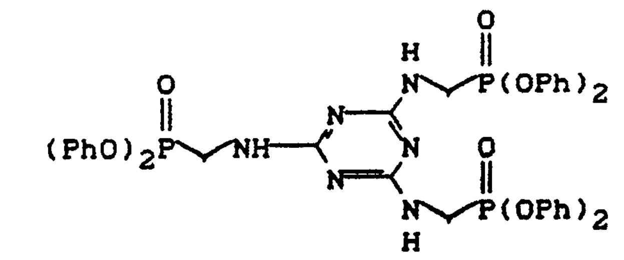 (XIIIb) und

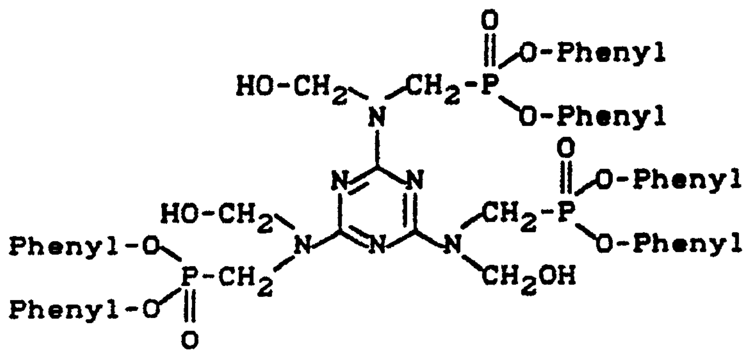 (XIIIc)

.

Darüber hinaus ist es auch möglich als phosphorhaltige Verzweiger Verbindungen der Formel

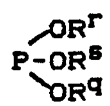 (XIV),

in der
$R^r$, $R^s$ und $R^q$ für $C_6$-$C_{12}$-Arylreste oder Methyl- oder Ethylreste, bevorzugt für den Phenylrest, stehen, einzusetzen.

Genannt werden beispielsweise als Verbindungen der Formel (XIV) p-Methyltriphenylphosphit, o-Methyltriphenylphosphit und Triphenylphosphit, bevorzugt Triphenylphosphit.

Die oben erwähnten Komponenten (B), die zum Aufbau der neuen, hochverzweigten Polyphosphonate dienen, werden in Mengen eingesetzt, die den zuvor erwähnten Mengen der die Polyphosphonate aufbauenden Struktureinheiten (II) bis (VI) entsprechen.

Es ist auch möglich, die erfindungsgemäßen, hochverzweigten Polyphosphonate zusätzlich über die Alkoholkomponente mit geringen Mengen (≦2 Mol-%) mehrfachfunktioneller Hydroxyverbindungen au verzweigen. Als Verzweiger dienen dabei die bekannten trifunktionellen und tetrafunktionellen Hydroxyderivate, wie 4,6-Dimethyl-2,4,6-tri-(4-hydroxyphenyl)-heptan; 1,3,5-Tri-(4-hydroxyphenyl)-benzol und 1,4-Bis-(4,4'-dihydroxytriphenylmethyl)-benzol, trifunktionelle oder tetrafunk tionelle Carbonsäurearyl-ester, wie Trimesinsäuretriarylester und Pyromellithsäuretetraphenylester. Als bevorzugte Hydroxyverzweiger werden Trihydroxybenzol oder Tris-1,3,5-[(4-hydroxy-2-phenylen-2-propylene)] eingesetzt (s. z.B. DE 3 833 694).

Desweiteren können die neuen, hochverzweigten Polyphosphonate zusätzlich noch mit bis zu 1 Mol-% mit Triphenylphosphat verzweigt sein.

Die Polyphosphonate haben einen unlöslichen Anteil von ≧5 Gew.-%, bevorzugt ≧30 Gew.-%, besonders bevorzugt ≧60 Gew.-% und ganz besonders bevorzugt ≧80 Gew.-%. Der unlösliche Anteil in den Polyphosphonaten wird bestimmt durch den nur noch gelierbaren Anteil der Polyphosphonate (Vorschrift in den nachstehenden Beispielen) und ist ein Maß für den Verzweigungsgrad.

Besonders bevorzugt werden zur Herstellung der erfindungsgemäßen Polyphosphonate Verzweiger eingesetzt, die den Formeln

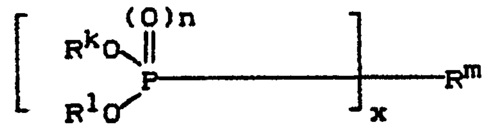 (XI)

und

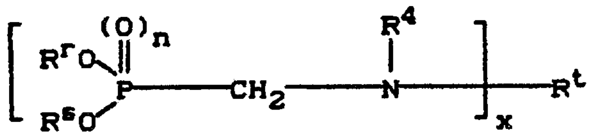 (XIII),

in denen
$R^k$, $R^l$, $R^m$, $R^r$, $R^s$, $R^t$, $R^4$ die zuvor genannten Bedeutungen haben,
entsprechen, insbesondere solche der Formeln

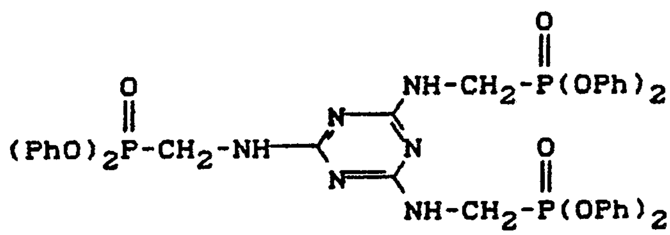

und/oder

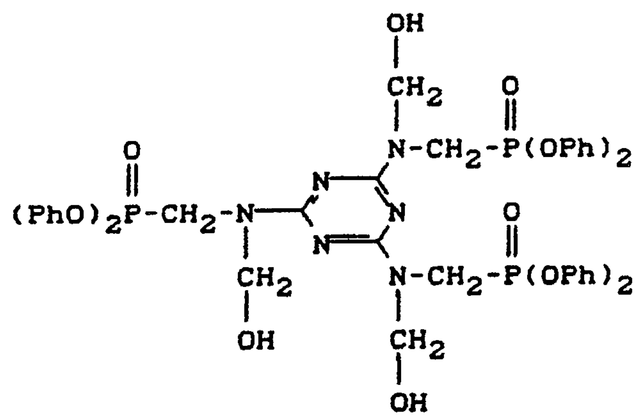

Die erfindungsgemäßen, hochverzweigten Polyphosphonate können als Additive zu Kunststoffen (Thermoplaste und Duromere) gegeben werden. Dabei zeigen sie im Vergleich zu bekannten Polyphosphonaten eine stark verbesserte Flammschutzwirkung. Außerdem ist die Einarbeitung der Polyphosphonate in die Kunststoffe ebenfalls verbessert (siehe Vergleichsbeispiele). Darüber hinaus können die erfindungsgemäßen Polyphosphonate als Stabilisatoren mit hervorragenden Migrationseigenschaften in Kunststoffen eingearbeitet werden.

Die erfindungsgemäßen Polyphosphonate können den Kunststoffen gegebenenfalls mit bekannten Verstärkungsmitteln und Verarbeitungshilfsmitteln in den üblichen Mischaggregaten, wie Walzen, Knetern, Ein- und Mehrwellenextrudern zugemischt werden. Es ist auch möglich, die erfindungsgemäßen Polyphosphonate den Kunststoffen ohne vorherige Schmelzcompoundierung als physikalisches Gemenge direkt, z.B. in konventionellen Spritzgußverfahren, zuzusetzen.

Im übrigen erfolgt die Abmischung der erfindungsgemäßen Polyphosphonate mit Kunststoffen in bekannter Weise (vgl. DE 3 733 840/Deutsche Patentanmeldung P 3 833 694.4/DE 3 342 414).

Es ist auch möglich, die erfindungsgemäßen, hochverzweigten Polyphosphonate direkt zur Herstellung von thermoplastischen Formkörpern, Filmen oder Fasern zu verwenden.

Beispiele

I. Synthese einiger ausgewählter Polyphosphonate (POP)

Hydrochinon-POP mit 1 Mol-% 2,4,6-Tris(aminomethylphosphono)-1,3,5-triazinhexaphenylester (Verzweiger A):

| | |
|---|---|
| 2310 g | (21 Mol) Hydrochinon |
| 5260 g | (21,2 Mol) Methanphosphonsäurediphenylester |
| 21 g | ( 1 g/Mol eingesetzter Dihydroxyverbindung) Natriumphenolat |
| 180 g | (210 mMol) Verzweiger A |
| 66 g | (210 mMol) Phenolphthalein |

werden unter Stickstoff 30 min bei 240 °C intensiv in einem Kolben vermischt. Innerhalb von 1 Stunde wird bei einem Vakuum von 500 mbar das Reaktionsgemisch auf 320 °C erhitzt. Nun wird der Druck auf ≤1,3 mbar reduziert und die Umesterung für 3 Stunden unter Abdestillieren des freiwerdenden Phenols fortgesetzt, wobei die Viskosität der Schmelze ansteigt. Man belüftet mit Stickstoff, läßt das Polymer bei stillstehendem Rührer absitzen und erhält 3,1 kg Polyphosphonat durch Abspinnen unter Druck und Granulieren des Schmelzstranges.
Gelgehalt: 72 % (zur Def. siehe Punkt II)
Hydrochinon-POP mit 5 Mol-% Triphenylphosphit:
Phosphonat wie oben
Verzweiger: 325,4 g (1 Mol Triphenylphosphit)
Fahrweise wie oben
Ausbeute: 3,2 kg
Gelgehalt: 82 %
Hydrochinon-POP mit 1,125 Mol-% Phosphaten P 3800 *) :
Phosphonat wie oben
Verzweiger: 182 g (230 mmol) Phosphazen P 3800)
Fahrweise wie oben
Ausbeute: 3,0 kg
Gelgehalt: 10 %
Hydrochinon-POP mit 3 Mol-% $(PhO)_2$-PO-$CH_2$-$CH_2$-PO-$(OPh)_2$:
Phosphonat wie oben
Verzweiger: 261 g (530 mmol) $(PhO)_2$-PO-$CH_2$-$CH_2$-PO-$(OPh)_2$
Fahrweise wie oben
Ausbeute: 2,9 kg
Gelgehalt: 15 %
Bisphenol-F-POP mit 1 Mol-% Verzweiger A:

| | |
|---|---|
| 4200 g | (21 Mol) Bisphenol F |
| 5260 g | (21,2 Mol Methanphosphonsäurediphenylester |
| 504 mg | (24 mg/Mol eingesetzter Dihydroxyverbindung) Zinkacetat |
| 108 g | (210 mMol) Verzweiger A |
| 66 g | (210 mMol) Phenolphthalein |

werden unter Stickstoff 30 min bei 240 °C intensiv in einem Kolben vermischt. Innerhalb von 1 Stunde wird bei einem Vakuum von 500 mbar das Reaktionsgemisch auf 320 °C erhitzt. Nun wird der Druck auf ≤1,3 mbar reduziert und die Umesterung für 3 Stunden unter Abdestillieren des freiwerdenden Phenols fortgesetzt, wobei die Viskosität der Schmelze ansteigt. Man belüftet mit Stickstoff, läßt das Polymer bei stillstehendem Rührer absitzen und erhält 4,4 kg Polyphosphonat durch Abspinnen unter Druck und

*) Bezugsquelle: Fa. Shin Nisso Kako, Japan

Granulieren des Schmelzstranges.
Gelgehalt: 78 %
Bisphenol-F-POP mit 1 Mol-% Verzweiger A und 1 Mol-% Tris-1,3,5-[(4-hydroxy-2-phenylen-2-propyliden)-benzol] (Verzweiger B):
Phosphonat wie oben
Verzweiger: 180 g (210 mmol) Verzweiger A
100 g (210 mmol) Verzweiger B
Fahrweise wie oben
Ausbeute: 4,3 kg
Gelgehalt: 95 %
Dioxydiphenyl-POP mit 0,75 Mol-% Phosphazen P 3800 *) :

| | |
|---|---|
| I. 1300 g | (7 Mol) Dioxydiphenyl |
| 1754 g | (7,07 Mol) Methanphosphonsäurediphenylester |
| 238 mg | (17 mg/Mol eingesetzter Dihydroxyverbingung) Natriumphenolat |
| 41 g | (50 mmol) Phosphazen P 3800*) |
| II. 120 g | (4 Mol-%) Diphenylcarbonat |

*) Bezugsquelle: Fa. Shin Nisso Kako, Japan

Die Substanzen unter I. werden (Stickstoff) bei 275 °C intensiv in einem Kolben vermischt. Nach 2 Stunden wird bei einem Vakuum von 100 mbar das Reaktionsgemisch auf 300 °C erhitzt. Nun wird das Vakuum innerhalb von 30 bis 45 min auf ≤1,3 mbar reduziert und die Umesterung für 30 min unter Abdestillieren das freiwerdenden Phenols fortgesetzt. Danach wird II. zugegeben und nach 15 min Rühren bei 500 mbar wird der Luftdruck erneut auf unter 1,2 mbar reduziert. Zur vollständigen Auskondensation erhitzt man die Schmelze für weitere 3 Stunden auf 320 °C. Man belüftet mit Stickstoff, läßt das Polymer bei stillstehendem Rührer absitzen und erhält 1,7 kg Polyphosphonat durch Abspinnen unter Druck und Granulieren des Schmelzstranges.
Gelgehalt: 15 %.
Dioxydiphenyl-Hydrochinon-POP (1:2) mit 1 Mol-% Verzweiger A:

| | |
|---|---|
| I. 1300 g | ( 7 Mol) Dioxydiphenyl |
| 1540 g | ( 14 Mol) Hydrochinon |
| 5260 g | ( 212 Mol) Methanphosphonsäurediphenylester |
| 357 g | (17 mg/Mol eingesetzter Dihydroxyverbindung) Natriumphenolat |
| 180 g | (210 mmol) Verzweiger A |
| II. 180 g | (0,8 Mol) Diphenylcarbonat |

Die Substanzen unter I. werden (Stickstoff) bei 275 °C intensiv in einem Kolben vermischt. Nach 2 Stunden wird bei einem Vakuum von 100 mbar das Reaktionsgemisch auf 300 °C erhitzt. Nun wird das Vakuum innerhalb von 30 bis 45 min auf ≤1,3 mbar reduziert und die Umesterung für 30 min unter Abdestillieren des freiwerdenden Phenols fortgesetzt. Danach wird II. zugegeben und nach 15 min Rühren bei 500 mbar wird der Luftdruck erneut auf unter 1,2 mbar reduziert. Zur vollständigen Auskondensation erhitzt man die Schmelze für weitere 3 Stunden auf 320 °C. Man belüftet mit Stickstoff, läßt das Polymer bei stillstehendem Rührer absitzen und erhält 2,5 kg Polyphosphonat durch Abspinnen unter Druck und Granulieren des Schmelzstranges.
Gelgehalt: 83 %.

## II. Herstellung, Verarbeitung und Prüfung der Komponenten

Alle thermoplastischen Polymere werden als Granulat eingesetzt. Die eingesetzten Komponenten werden in einem Zweiwellenextruder geschmolzen, vermischt, zu Strängen extrudiert und granuliert. Die Herstellung der Formmassen kann beispielsweise mit dem Extruder ZSK 32 der Firma Werner und Pfleiderer, bei den üblichen Verarbeitungstemperaturen und bei einer Schneckendrehzahl von 80 bis 130

U/min sowie einem Durchsatz von 8 bis 14 kg/h erfolgen.

Nach ausreichender Trocknung (z.B. 3 bis 4 Stunden bei 120° C) wird das Granulat auf üblichen Spritzgußmaschinen bei Massetemperaturen von 230° bis 320° C, einer Formtemperatur von 80° bis 130° C und einer Schmelzestandzeit von nicht länger als 9 Minuten au Formkörpern bzw. Normprüfstäben verspritzt.

Die Prüfung der Brandwidrigkeit erfolgt nach den Richtlinien der Underwriter Laboratories (UL-94-Test). Die Ergebnisse sind in den nachfolgenden Tabellen zusammengefaßt. Die Mengen der eingesetzten Komponenten sind in Gewichtsteilen angegeben.

Zur Bestimmung des Verzweigungsgrads der Polyphosphonate wird Gelkörperanteil bestimmt. Hierzu werden 1,0 g gemahlenes Polyphosphonat (Korngröße kleiner als 1 mm) in 50 ml frisch destilliertes, alkoholfreies Dichlormethan gegeben. Nach 5 min Beschallen im Ultraschallbad (Badtemperatur: 21-28° C) (Firma Bransonic® B-2200 E4, HF-Nennleistung: 60 Watt) bei Raumtemperatur filtriert man ab und bestimmt den gelösten Anteil an Phosphonat nach dem Abdestillieren des Lösungsmittels.

Die Glastemperaturen der Phosphonate wurden mit handelsüblichen DSC-Geräten bestimmt.

Die nachstehende Tabelle 1 belegt, daß durch die Verzweigung, die Glastemperatur der Polyphosphonate erheblich gesteigert werden kann und somit die weichmachenden Eigenschaften in Kunststoffen z.B. Polyalkylenterephthalaten reduziert.

| Glastemperaturen eines nicht verzweigten (1), eines herkömmlichen verzweighten (2) und eines erfindungsgemäß verzweighten (3) Polyphosphonats: | |
|---|---|
| | $T_G$ |
| Hydrochinon-Phosphonat (1) (nicht verzweigt) | ca. 60° C |
| Hydrochinon-Phosphonat mit 1 Mol-% Verzweiger B (2) | ca. 60° C |
| Hydrochinon-Phosphonat mit 1 Mol-% Verzweiger A und 1 mol-% Verzweiger B (3) | ca. 70° C |

Die nachstehende Tabelle 2 zeigt einige erfindungsgemäße Beispiele (1, 2, 3, 6) im Vergleich zum Stand der Technik (Beispiel 4, 5). So erkennt man, das durch die Verzweigung das Verarbeitungsverhalten des Hydrochinon-Phosphonats (Hy-POP) deutlich gesteigert werden kann, während im Falle der Dioxydiphenylphosphonate (DOD-POP) das Brandverhalten durch den Verzweiger um eine UL-Klasse bei 0,8 mm verbessert werden kann.

Tabelle 2

| Beispiel | 1 | 2 | 3 | 4 Vergleich | 5 Vergleich | 6 |
|---|---|---|---|---|---|---|
| PET (%) | 54,4 | 54,4 | 54,4 | 54,4 | 54,4 | 54,4 |
| übliche ** Additive (%) | 2,6 | 2,6 | 2,6 | 2,6 | 2,6 | 2,6 |
| Hy-POP (A) (%) | 12,5 | - | - | - | - | - |
| Hy-POP (B) (%) | - | 12,5 | - | - | - | - |
| Hy-POP (C) (%) | - | - | - | 12,5 | - | - |
| Hy-DOD-POP (%) | - | - | 12,5 | - | - | - |
| DOD-POP (A) (%) | - | - | - | - | 12,5 | - |
| DOD-POP (B) (%) | - | - | - | - | - | 12,5 |
| Glasfasern (%) | 30,0 | 30,0 | 30,0 | 30,0 | 30,0 | 30,0 |
| PTFE (%) | 0,5 | 0,5 | 0,5 | 0,5 | 0,5 | 0,5 |
| UL-94 (0,8 mm) 2d/7d | V O | V O | V O | *) | V I | V O |
| UL-94 (1,6 mm) 2d/7d | V O | V O | V O | *) | V O | V O |

*) nach eigenen Versuchen nicht compoudierbar

**) als Additive werden eingesetzt:

0,5 g PE-Wachs 52 g der Firma Hoechst;

0,1 % Stabaxol der Firma Rhein-Chemie und

2 % MVR Microtalkum der Firma Mistron Mineralien, Wildberg

| | |
|---|---|
| Hy-POP (A): | 1,125 Mol-% Phosphazen P 3800[1)] |
| Hy-POP (B): | 1 Mol-% 2,4,6-Tris(aminomethylphosphono)-1,3,5-triazinhexaphenylester (Verzweiger A) |
| Hy-POP (C): | unverzweigt |
| Hy-DOD-POP: | 1,125 Mol-% Phosphazen P 3800[1)] |
| DOD-POP (A): | 1 Mol Tris-1,3,5-[(4-hydroxy-2-phenylen-2-propyliden)-benzol] (Verzweiger B/nicht erfindungsgemäße Verzweiger) |
| DOD-POP (B): | 1,125 Mol-% Phosphazen P 3800[1)] |

[1)] Bezugsquelle: Fa. Shin Nisso Kako, Japan

Eingesetzte Komponenten gemäß Tabelle 2

1. Polyethylenterephthalat mit einer Intrinsic-Viskosität von 0,72 dl/g, gemessen in Phenol/o-Dichlorbenzol-Gemisch (Gew.-Verhältnis 1:1), 25 °C, Ubbelohde Viskosimeter (PET)
2. PTFE der Hoechst AG (Hostaflon® TF 2027)
3. handelsübliche Glasfasern

**Ansprüche**

1. Hochverzweigte Polyphosphonate basierend auf
A) 95 bis 99,9 Gew.-% Struktureinheiten der Formel

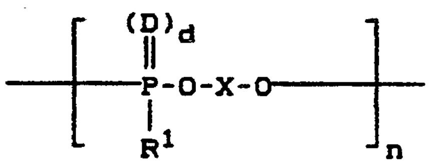

(I),

worin
$R^1$ für einen gegebenenfalls substituierten $C_1$-$C_{10}$-Alkylrest oder für einen gegebenenfalls substituierten aromatischen Ring mit 6 bis 12 C-Atomen steht,
D für Schwefel oder Sauerstoff,
d Null oder 1 bedeutet,
n für ganze Zahlen von 2 bis 1000 steht und
X für die Formel

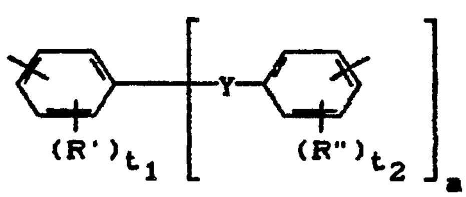

steht,

in der
Y eine Einfachbindung ist oder $C_1$-$C_3$-Alkylen, $C_5$-$C_{12}$-Cycloalkylen oder O, S, CO, $SO_2$ bedeutet,
$R'$ und $R''$ unabhängig voneinander $C_1$-$C_{10}$-Alkyl, Halogen, Phenyl oder Wasserstoff bedeuten,
a für Null oder 1 steht und
$t_1$ und $t_2$ unabhängig voneinander 0, 1, 2, 3 oder 4 bedeuten,
oder

X ein Naphthylen- oder Phenolphthaleinrest bedeutet,
und
B) 0,1 bis 5 Gew.-% Struktureinheiten der Formeln

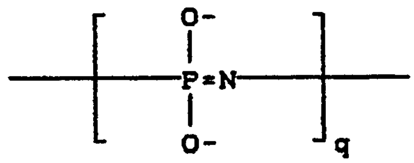 (II),

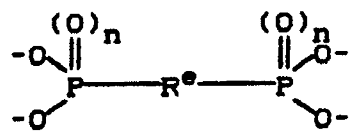 (III),

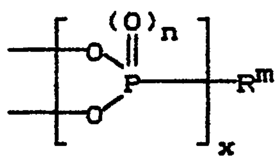 (IV),

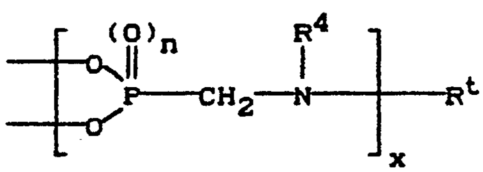 (V)

und/oder

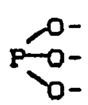 (VI),

worin
$R^4$ für Wasserstoff oder einen gegebenenfalls substituierten $C_1$-$C_{10}$-Alkylrest steht,
$R^e$ ein divalenter Rest der Formel

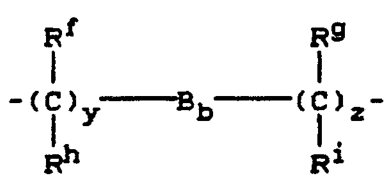 ist,

in der
y und z unabhängig voneinander Null, 1, 2, 3, 4 oder 5 bedeuten,
b für Null oder 1 steht,
B O, S, $SO_2$, $NR^j$ bedeutet und
$R^f$, $R^g$, $R^h$, $R^i$ und $R^j$ für Wasserstoff oder für gegebenenfalls substituiertes $C_1$-$C_6$-Alkyl oder, gegebenenfalls substituiertes $C_6$-$C_{12}$-Aryl stehen,
$R^m$ für einen oligomeren oder polymeren Rest steht, an den der Phosphor direkt oder gegebenenfalls über eine $C_1$-$C_{10}$-Alkylkette esterartig gebunden ist, wobei der oligomere oder polymere Rest auf ungesättigten organischen Verbindungen basiert, wie Acrylsäure, Methacrylsäure, Ethen, Propen, Buten,

Maleinsäure, und bis zu 1000 Kohlenstoffatomen besitzt,
$R^t$ ein Rest einer organischen Verbindung ist, die sich ableitet von gegebenenfalls substituierten Aminen, Diaminen, Triaminen, Oligo- oder Polyaminen, und bis zu 1000 C-Atomen besitzt,
q für eine ganze Zahl größer als 2 steht,
n Null oder 1 bedeutet, und
x für eine ganze Zahl von 2 bis 1000 steht.

2. Hochverzweigte Polyphosphonate nach Anspruch 1 basierend auf 96 bis 99,5 Gew.-% der Komponente A) und 0,5-4 Gew.-% der Komponente B).

3. Verfahren zur Herstellung von hochverzweigten Polyphosphonaten nach Anspruch 1, dadurch gekennzeichnet, daß man mindestens einen Phosphonsäureester und eine polyfunktionelle Phosphorverbindung, die den in Anspruch 1 erwähnten Struktureinheiten (II) bis (VI) der Komponente B zugrundeliegen, mit einer aromatischen Dihydroxyverbindung in der Schmelze in sauerstoff-freier Gasatmosphäre bei Atmosphärendruck oder verminderten Druck in Gegenwart analytischer Mengen eines Umesterungskatalysators unter Abdestillieren der flüchtigen Bestandteile umestert.

4. Verwendung der hochverzweigten Polyphosphonate nach Anspruch 1 als Additive zu Kunststoffen.

5. Verwendung der hochverzweigten Polyphosphonate nach Anspruch 1 zur Herstellung von thermoplastischen Formkörpern, Filmen oder Fasern.